# FASCICULE DE BREVET EUROPEEN

(11) **EP 2 174 270 B1**
(45) Date de publication et mention de la délivrance du brevet: **26.01.2022**
(21) Numéro de dépôt: 08806167.6
(22) Date de dépôt: 04.07.2008
(51) Int. Cl.: G06K 19/077

(54) **SUPPORT FIBREUX POUR INSERT COMPORTANT UNE ANTENNE**
FASERSUBSTRAT FÜR EINEN EINSATZ MIT EINER ANTENNE
FIBROUS SUBSTRATE FOR INSERT INCLUDING AN ANTENNA

(30) Priorité: 04.07.2007 FR 0756278
(43) Date de publication de la demande: 14.04.2010
(73) Titulaire: HID Global CID SAS, 92150 Suresnes (FR)
(72) Inventeur: RANCIEN, Sandrine, F-38140 La Murette (FR); DESNOUS, Céline, F-38500 Voiron (FR)
(74) Mandataire: Andrieux, Benoît
(86) Numéro de dépôt international: PCT/FR2008/051249
(87) Numéro de publication internationale: WO 2009/007659

(56) Documents cités:
- EP-A- 0 615 285
- EP-A- 1 236 650
- EP-A- 1 284 320
- EP-A- 1 562 140
- WO-A-01/03058
- WO-A-02/02350
- WO-A-2005/098748
- US-A1- 2004 154 766
- US-A1- 2007 146 765
- US-B1- 6 667 092

## Description

La présente invention concerne un insert avec dispositif RFID comprenant une antenne filaire, destiné à être intégré par exemple dans un document de sécurité tel qu'un passeport ou une carte d'identité.

Les caractéristiques doit être protégé des décharges électrostatiques.

Sur le plan mécanique, l'insert doit être relativement plat pour ne pas créer de surépaisseur importante et l'insert doit être suffisamment flexible pour être compatible avec la rigidité du document dans lequel il est intégré. L'insert doit protéger mécaniquement l'antenne et éventuellement le composant électronique relié, à l'antenne des contraintes mécaniques du type impact, flexion ou torsion.

L'insert doit aussi protéger chimiquement l'antenne et éventuellement le composant électronique de l'humidité, afin de prévenir tout phénomène de corrosion.

L'insert doit pouvoir être pris en sandwich entre deux autres supports que sont la couverture et la page de garde du livret dans le cas d'un passeport ou deux films plastiques dans le cas d'une carte d'identité. Dans les deux cas, il est souhaitable que l'insert présente sur ses faces extérieures une énergie de surface assez élevée et une capacité d'absorption suffisante pour favoriser l'assemblage par collage de l'insert avec d'autres substrats. En effet, toute tentative de séparation de l'insert du document dans lequel il est intégré doit entrainer un endommagement de l'insert. Pour l'application carte d'identité, l'insert doit éventuellement être imprimable et personnalisable.

Sur le plan de la sécurité, l'insert doit être suffisamment cohésif et solide pour ne pas se délaminer spontanément dans l'épaisseur ou se déchirer, ceci pendant la durée d'utilisation du document de sécurité dans lequel il est intégré.

L'insert doit aussi être inviolable pour prévenir tout enlèvement du dispositif RFID par un fraudeur en vue de l'utiliser dans un autre document. Toute tentative de falsification de l'insert par pelage à sec, à la température, dans l'eau ou les solvants doit être impossible ou se traduire par une destruction de l'insert et surtout du dispositif RFID.

La demande US 2005/0060637 divulgue un insert pour document d'identification qui comprend une structure multicouche avec un support comprenant à coeur une puce et une antenne formant un transpondeur et deux supports extérieurs en plastique mousse, ces deux supports prenant en sandwich le support porteur du transpondeur. Ce dernier est constitué d'un matériau thermoplastique notamment à base de polyimide ou d'un dérivé. Les supports en plastique mousse sont à base de polyoléfine et notamment de polyéthylène chargé silice. Le support du transpondeur et l'un des supports extérieurs sont dotés d'une ouverture pour loger la puce partiellement en épaisseur et limiter toute surépaisseur.

Un tel insert ne présente pas toutes les propriétés recherchées ci-dessus énumérées. En effet, bien que l'utilisation pour l'insert de supports extérieurs en polyéthylène chargé silice soit plus favorable à l'accrochage des adhésifs utilises pour l'assemblage ultérieur dans un document de sécurité qu'un insert en pur plastique, l'insert présente l'inconvénient après assemblage entre une couverture de passeport et une page de garde de ne pas offrir une inviolabilité complètement satisfaisante.

La séparation de l'insert de la couverture du passeport, par pelage à sec, est tout à fait possible sans entrainer d'endommagement de l'insert, car la force de cohésion de l'insert est supérieure à la force d'adhésion de la couverture sur l'insert.

La demande US 2006/0005050 décrit un insert à intégrer dans un passeport, cet insert présentant des caractéristiques physiques spécifiques pour permettre de rendre évidente toute tentative de falsification, notamment lors du pelage. Cette évidence de falsification est apportée par la présence de zones de fragilisation sur la puce et l'utilisation d'une colle avec des réserves pour fixer l'antenne. L'insert est à base de matériau type Teslin^{®} ou Artysin^{®}. Cependant, l'antenne n'est pas intégrée dans l'insert mais présente à la surface de cet insert. Cette antenne peut éventuellement être recouverte d'une couche d'adhésif qui n'a pas pour fonction de faire barrière à l'eau. L'antenne et sa connexion sur la puce ne sont donc pas protégées de l'humidité liée aux agressions extérieures ou à l'utilisation de colles froides aqueuses lors de l'assemblage ultérieur dans les documents de sécurité.

La publication WO 2006/079904 divulgue un insert pour document d'identification qui comprend une structure bicouche avec deux couches en papier, couchées sur leur face interne avec une matière plastique, le dispositif RFID étant pris en sandwich après assemblage à chaud entre les deux couches en matière plastique. La matière plastique couchée sur la face interne des deux papiers est un matériau thermoplastique tel que du polyéthylène. Un tel insert présente l'inconvénient d'être violable notamment par pelage à chaud. En effet, les deux couches thermoplastiques après assemblage à chaud peuvent être de nouveau ramollies ou fondues permettant ainsi l'enlèvement du dispositif.

La demande US 20050212131 divulgue un insert pour document d'identification qui comprend une structure multicouche incluant le dispositif RFID. Ce type d'insert présente l'inconvénient de ne pas être plan et, du coup, est susceptible de créer une surépaisseur visible après intégration dans un document de sécurité.

La demande WO 2006000849 décrit un insert qui comprend une structure multicouche avec au moins deux couches flexibles et un support flexible interne de dimensions limitées, sur lequel sont positionnées un module et une antenne. Ce support et le dispositif RFID sont compensés en épaisseur par différentes couches intermédiaires. Afin de rendre cet insert inviolable et notamment d'éviter que le dispositif RFID ne puisse être enlevé par pelage des couches constitutives de l'insert, il est proposé de faire des trous en regard dans chacune des couches constitutives de l'insert sauf dans les couches externes flexibles, et de les remplir d'une colle offrant à la fois une résistance chimique et une résistance mécanique, telle qu'une colle époxy, polyimide ou activable UV. Cette publication prévoit aussi d'utiliser des rivets plastiques ou métalliques à la place de la colle. Les couches externes peuvent être constituées d'un matériau de base fibreuse ou de base plastique. Un tel insert est relativement compliqué à réaliser, du fait du nombre relativement élevé de couches en jeu et du nombre d'opérations à effectuer.

La demande US 2004/0154766 décrit un support flexible comportant une puce et sur lequel est imprimé une antenne.

L'invention vise à proposer un insert pour document de sécurité qui remédie à tout ou partie des inconvénients précédents et qui soit fiable et relativement simple de réalisation.

L'invention a pour objet, selon l'un de ses aspects, un assemblage selon la revendication 1.

La base fibreuse peut comporter en masse au moins 40 %, mieux 50 %, encore mieux 60 %, préférentiellement au moins 70 %, de fibres naturelles, avec par exemple une proportion moins élevée de fibres naturelles longues que de fibres courtes, notamment lorsque la base fibreuse comporte une proportion relativement élevée de fibres synthétiques.

Selon un autre exemple, la base fibreuse peut comporter une proportion moins élevée de fibres naturelles longues que de fibres naturelles longues, par exemple 20 % des fibres naturelles sont courtes et 80% des fibres naturelles sont longues.

Une proportion élevée de fibres naturelles présente l'avantage d'offrir une base fibreuse plus cohésive, bien que moins stable dimensionnellement.

La base fibreuse comporte également des fibres synthétiques, de préférence des fibres d'une matière thermoplastique, notamment d'un polyamide, d'un polyester, d'une polyoléfine et/ou un mélange de telles fibres.

La base fibreuse comporte entre 5 et 25 % de fibres synthétiques, en masse dans la base fibreuse.

La teneur massique en fibres synthétiques dans la base fibreuse peut être évaluée par exemple par une mesure tridimensionnelle par stéréologie sur coupe bidimensionnelle au microscope électronique à balayage.

Plusieurs images en coupe peuvent être acquises, dans le sens marche de la machine (SM) 21 papier et dans le sens travers (ST).

Le nombre de fibres synthétiques interceptées par la coupe pour chaque image est compté pour chaque sens papier, à savoir Nₛₜ et Nₛₘ. Le nombre moyen de fibres synthétiques dans le papier est calculé par N=(Nₛₜ.Nₛₘ)^{1/2}.

La longueur totale L de papier comptée est donnée par la somme des longueurs des images comptées.

Le nombre de fibres par mètre linéaire de papier est donnée par N/ml=N/L.

Le poids de fibres au m² est calculé en utilisant le titre/densité/masse linéique (en dtex) et N/ml a l'aide de la formule suivante : PoidsFS/m² = w = (Pi/2) *N/ml*Titre.

Le taux de fibres synthétiques est obtenu en divisant ce poids par le grammage de la base fibreuse. De préférence, le nombre d'images est suffisant pour compter au moins 400 fibres synthétiques, afin de réduire l'imprécision de la méthode.

Les fibres naturelles peuvent être formées en tout ou partie de fibres cellulosiques, notamment être en totalité des fibres cellulosiques.

La base fibreuse peut comporter des fibres de polyamide, les fibres de polyamide étant par exemple les seules fibres synthétiques de la base fibreuse. La longueur moyenne des fibres synthétiques est comprise entre 3 et 10 mm, étant par exemple supérieure ou égale à 4 mm. Le diamètre moyen des fibres synthétiques est compris entre 0,9 et 4,2 dtex, par exemple entre 0,9 et 3,3 dtex, mieux entre 1,2 et 2 dtex, étant par exemple égal à 30% à celui des fibres naturelles.

L'utilisation de fibres synthétiques dans la base fibreuse apporte les propriétés suivantes :
- résistances à la déchirure et à la traction élevées,
- flexibilité,
- stabilité dimensionnelle, ce qui évite qu'une trop grande variation dimensionnelle des deux supports et surtout du support qui reçoit l'antenne puisse entrainer une modification inacceptable des fréquences de fonctionnement du dispositif RFID avec lequel l'antenne peut être couplée ou reliée,
- insertion de l'antenne par ultrasons plus aisée, car possibilité de déplacement des fibres synthétiques sous la pression du fil d'antenne.

La base fibreuse du premier support comporte un liant, naturel ou synthétique. Ce liant de la base fibreuse peut être avantageusement choisi parmi les polymères thermoplastiques de température de transition vitreuse Tg inférieure ou égale à +20°C, mieux à 10°C, pour apporter de la souplesse.

Dans un exemple de mise en oeuvre, les fibres de la base fibreuse sont liées avec un liant précipité en masse, le liant de la base fibreuse étant par exemple choisi parmi les polymères de Tg inférieure ou égale à 10°C, étant par exemple choisi parmi les copolymères styrène butadiène, les polymères acryliques et les acétates de vinyle et leurs copolymères.

Dans un autre exemple de mise en oeuvre de l'invention, le liant de la base fibreuse est par exemple introduit dans la base fibreuse par surfaçage, le liant de la base fibreuse étant choisi par exemple parmi les polymères de Tg inférieure ou égale à 10°C, le liant de la base fibreuse comportant par exemple un liant naturel, notamment de l'amidon, ou synthétique, notamment de l'alcool polyvinylique ou un polymère styrène acrylique, par exemple de Tg voisine de 7 °C.

Le liant de la base fibreuse est éventuellement associé à un agent assouplissant. Ce dernier peut être choisi parmi la glycérine, l'urée ou l'urée nitrate.

La présence d'un liant souple en masse ou en surface de la base fibreuse souple et éventuellement d'un agent assouplissant apporte les propriétés suivantes :
- flexibilité,
- cohésion interne pour offrir à l'insert la résistance a la délamination suffisante,
- effet bouche porage pour maintenir à la surface du support flexible la couche de surface à base de liant de couchage et de charges.

La base fibreuse comprend au moins une charge minérale. La présence de charges dans la base fibreuse peut permettre de gagner en flexibilité du support flexible mais peut faire perdre en cohésion interne. La présence de charges peut améliorer la stabilité dimensionnelle du support et, peut améliorer ainsi la stabilité de l'antenne lors du processus de lamination à chaud des deux supports de l'insert ou lors de l'utilisation finale de l'insert en fonction des conditions de température et d'humidité externes.

La charge dans la base fibreuse est de nature minérale, étant choisie parmi les carbonates, notamment de calcium, le talc, le kaolin, les silicates d'aluminium, le dioxyde de titane et leurs mélanges. La base fibreuse peut comporter entre 0 et 25 %, par exemple 0 et 20 %, en poids de charge minérale.

Le liant de couchage comporte une matière thermoplastique, la quantité de matière thermoplastique étant ajustée pour obtenir au couchage une concentration inférieure ou égale a 20g/m² sec, mieux inférieure ou égale à 10 g/m² sec, le liant de couchage de la couche de surface comportant un polymère ou un copolymère de nature styrène butadiène, acrylique, styrène acrylique ou vinylique.

La couche de surface d'au moins un des supports peut être à base d'un polymère ou d'un copolymère thermoplastique, et de préférence d'une dispersion de polymère souple de Tg < 20°C, une charge minérale ayant une capacité d'absorption relativement élevée (absorption d'huile selon DIN EN ISO 787-5), c'est-à-dire supérieure ou égale à 30 ml/100g.

La présence d'un couchage à base de liant polymères thermoplastiques et de charges minérales au moins à la surface du support sur lequel est positionnée l'antenne permet une insertion par enfoncement et collage plus aisée de l'antenne par ultrasons.

Une couche de surface à base de liant polymère thermoplastique et de charges présente un comportement à la température et une rigidité suffisante pour permettre une bonne insertion d'un fil d'antenne, c'est-à-dire un bon accrochage de l'antenne sur/dans le support pour un bon déroulement de l'antenne, qui peut être quantifié par un niveau de force d'arrachage minimal, et un niveau de pénétration de l'antenne dans le support satisfaisant pour limiter les surépaisseurs locales sur l'insert.

Des charges à la surface du papier, dans un taux d'emploi inférieur a 20 g/m² sec, améliorent également la transmission de l'énergie ultrasonore.

Le couchage à base de liant polymère thermoplastique et de charges minérales au moins à la surface du support sur lequel est positionnée l'antenne procure une énergie de surface et une capacité d'absorption plus élevées du support, qui favorisent l'étalement et la pénétration d'un adhésif, et donc l'adhérence ultérieure de l'adhésif activable à chaud, utilisé dans le processus d'assemblage des deux supports flexibles de l'insert mais aussi l'assemblage ultérieur par collage à froid ou à chaud de l'insert avec d'autres matériaux, par exemple une couverture et une page de garde d'un livret de passeport, tout en offrant une sécurité satisfaisante en cas de tentative de séparation de l'ensemble.

Des charges absorbantes à la surface du papier avec un degré d'absorption d'huile supérieur à 30 ml/100g, comme par exemple des silices (par exemple de degré d'absorption de 200-300 ml/100g), des silicates d'aluminium et de sodium (par exemple de degré d'absorption de 80 ml/100g), des hydrates d'alumine (degré d'absorption de 30-55 ml/100g ), du dioxyde de titane et leurs mélanges favorisent l'étalement et la pénétration de l'adhésif.

La face du papier recevant l'antenne peut recevoir un adhésif, l'adhésif pouvant présenter une pégosité naturelle ou déclenchée par exemple par exposition a un rayonnement UV ou de la chaleur, après sa dépose, la pégosité persistant par exemple 60 secondes après sa pose. L'adhésif est par exemple déposé par pulvérisation, impression, notamment sérigraphie, ou par un système a aiguille ou transfert.

L'adhésif peut être réticulable à chaud ou réticulable sous UV ou EB, l'adhésif pouvant comporter ou non un agent réticulant, l'adhésif dérivant par exemple d'un acrylate uréthane et comportant un agent réticulant, l'agent réticulant par exemple étant de type isocyanate.

L'adhésif peut être déposé pleine laize ou recouvrir seulement une partie de la face du premier support flexible, sur une région s'étendant sous l'antenne.

L'assemblage peut comporter un composant électronique RFID, par exemple un module relié à l'antenne ou couplé électromagnétiquement a celle-ci. Le composant peut être logé au moins particulièrement dans un évidement du premier support.

L'invention a encore pour objet, selon un autre de ses aspects, un insert comportant un assemblage tel que défini ci-dessus, comportant un deuxième support fibreux superposé et collé au premier, l'antenne étant située entre les deux supports.

Les supports peuvent comporter deux évidements respectifs superposés au moins partiellement, dans lesquels est disposé un composant électronique, par exemple un module RFID comportant une puce de circuit intégré, ce module présentant par exemple une base élargie surmontée d'un bossage.

Le composant peut être relié électriquement aux extrémités de l'antenne ou couplé électromagnétiquement à celle-ci.

Les trous peuvent être traversants.

Le deuxième support peut être de composition identique au premier, étant éventuellement de grammage différent du premier. L'épaisseur totale des différentes couches superposées de l'insert peut être sensiblement égale à l'épaisseur du module.

Le deuxième support peut comporter un adhésif activable, par exemple à chaud, c'est-à-dire exerçant une fonction adhésive à chaud en présence ou non d'un agent réticulant.

Le deuxième support peut être réticulable, c'est-à-dire apte à former un réseau tridimensionnel, à chaud, de par sa nature et/ou la présence d'un agent réticulant.

L'invention a encore pour objet, selon un autre aspect, un procédé de fabrication d'un assemblage tel que défini ci-dessus, comportant l'étape consistant à déposer le fil d'antenne sur le premier support.

Le procédé peut comporter l'étape consistant à enduire le premier support flexible d'un adhésif avant la pose du fil d'antenne dessus.

La fixation du fil d'antenne sur le premier support peut s'effectuer par compression (notamment dans le cas où l'antenne est solidarisée avec le premier support via un adhésif), thermocompression, ou par ultrasons.

Cet adhésif peut présenter une pégosité déclenchée par un rayonnement UV. Dans ce cas, le procédé peut par exemple comporter l'étape consistant à exposer localement l'adhésif a un rayonnement UV, par exemple en même temps ou juste avant la pose du fil d'antenne.

Cet adhésif peut présenter une pégosité déclenchée par la chaleur.

Les deux supports peuvent être assembles par le biais d'un adhésif en polymère ou copolymère réactif, activable à la température, avec ou sans pression, cet adhésif étant encollé sous forme fluide sur l'un des supports.

Le deuxième support peut aussi être enduit d'un adhésif réactif, activable à chaud, par exemple d'un polyuréthane réactif ou d'un acrylate réactif

Le deuxième support peut être enduit d'un adhésif comportant un agent réticulant, par exemple de nature mélamine, isocyanate ou époxy.

Le premier et/ou le deuxième support peuvent être enduits d'adhésif en ligne, lors de la fabrication du support, par exemple grâce à un dispositif de type Twin HSM.

L'utilisation pour l'assemblage des deux supports d'un adhésif à base de polymère réactif, mono ou bi-composant et de préférence d'un adhésif de base polyuréthane ou de base copolymère acrylate additionné d'un agent réticulant, par exemple de nature époxy, mélamine ou isocyanate, apporte les propriétés suivantes :
- une résistance mécanique accrue rendant plus difficile le délaminage de l'insert dans des conditions normales d'utilisation,
- une barrière a l'humidité du joint d'adhésif, pour empêcher les phénomènes de corrosion,
- une inviolabilité aussi bien par pelage à sec, qu'à chaud (110°C - 130°C), ou après immersion dans des produits chimiques (eau, solvant, etc.),
- une flexibilité de l'insert permettant de ne pas rigidifier outre mesure le document de sécurité.

L'invention a encore pour objet un document de sécurité comportant un insert tel que défini ci-dessus.

Dans un exemple de mise en oeuvre de l'invention, le premier support comprend des fibres synthétiques en matière thermoplastique, par exemple des fibres d'un polyamide, d'un polyester et/ou d'une polyoléfine. La longueur et le diamètre de ces fibres pourront dépendre notamment des propriétés mécaniques que l'on souhaite conférer au support. Par exemple, dans le cas notamment ou l'on souhaite que le support soit résistant à la déchirure, il est utile d'incorporer une certaine proportion de fibres de polyamide de longueur comprise entre 3 et 10 mm. Leur diamètre est par exemple proche de celui des fibres de bois et/ou de coton utilisées dans le support, pour favoriser la planéité du support, le diamètre étant compris entre 0,9 et 4,2 dtex, par exemple entre 0,9 et 3,3 dtex, et par exemple voisin de 1,7 dtex (13,8 microns).

Les fibres en matière thermoplastique peuvent être dispersées de façon homogène dans la couche fibreuse. Un tel support comporte entre 5 et 25 % de fibres synthétiques.

Dans un exemple de mise en oeuvre de l'invention, la base fibreuse du premier support est liée avec un polymère synthétique précipité en masse de Tg< 20 °C et par exemple avec un polymère souple de Tg de l'ordre de -20 °C, qui peut être précipité *in situ* sur les fibres selon des procédés connus dans l'état de l'art.

Dans un autre exemple de mise en oeuvre de l'invention, la base fibreuse du premier support est liée avec un polymère synthétique de Tg< 20 °C introduit par surfaçage *size presse* ou par imprégnation et par exemple avec un polymère souple de Tg de l'ordre de 7 °C, qui offre à la fois souplesse et faible encrassement des rouleaux de *size presse* ou d'imprégnatrice. Ce liant peut être associé à un agent assouplissant tel que l'urée nitrate pour accroitre encore la souplesse du support flexible.

Dans un autre exemple de mise en oeuvre de l'invention, la base fibreuse du premier support est liée avec un liant naturel hydrophile tel que par exemple l'alcool polyvinylique ou l'amidon, introduit par surfaçage *size presse* ou par imprégnation. Ce liant peut être additionné d'agent assouplissant, par exemple de glycérine, pour accroitre la souplesse du support flexible.

Dans un exemple ne faisant pas partie de l'invention, l'un des supports de l'insert présente au moins sur l'une de ses faces une enduction comprenant un liant thermoplastique et des charges minérales. Ce liant pourra être choisi parmi les liants synthétiques, incluant les polymères ou les copolymères acryliques, vinyliques, styrène butadiène, styrène butadiène acrylonitrile.

Dans un exemple de mise en oeuvre de l'invention, l'adhésif qui permet de solidariser l'antenne et le premier support est à base de polymère. Cet adhésif est de préférence choisi de manière à présenter naturellement ou sous amorce d'un rayonnement par exemple UV ou de la chaleur, une pégosité suffisante pour maintenir l'antenne lors de son déroulement sur le support flexible avant l'assemblage avec le second support. Cet adhésif est de préférence exempt d'eau et ne présente pas d'acidité pour ne pas induire de phénomène de corrosion du fil de l'antenne. L'adhésif peut être par exemple à base d'acrylate uréthane ou d'époxy.

Dans un exemple de mise en oeuvre de l'invention, le deuxième support est enduit sur toute sa surface d'un adhésif en polymère réactif, activable à chaud et notamment à une température de l'ordre de 140 °C. Cet adhésif est de préférence exempt d'eau et ne présente pas d'acidité pour ne pas induire de phénomène de corrosion du fil de l'antenne. L'adhésif préféré est un polyuréthane réactif ou un copolymère acrylate avec une résine mélamine.

L'invention a encore pour objet, selon un autre de ses aspects, un procédé de fabrication d'un document de sécurité comportant l'étape consistant à assembler un insert tel que défini ci-dessus avec un livret ou au moins un film, notamment avec une colle à froid, en particulier une colle vinylique ou acrylique, ou un adhésif activable à chaud.

L'invention pourra être mieux comprise a la lecture de la description qui va suivre, d'exemples de mise en oeuvre non limitatifs de celle-ci, et à l'examen du dessin annexé, sur lequel :
- la figure 1 est une coupe schématique dans l'épaisseur d'un exemple d'insert réalisé conformément à l'invention
- les figures 2 et 3 sont des schémas en blocs illustrant des exemples de mise en oeuvre de procédés selon l'invention.

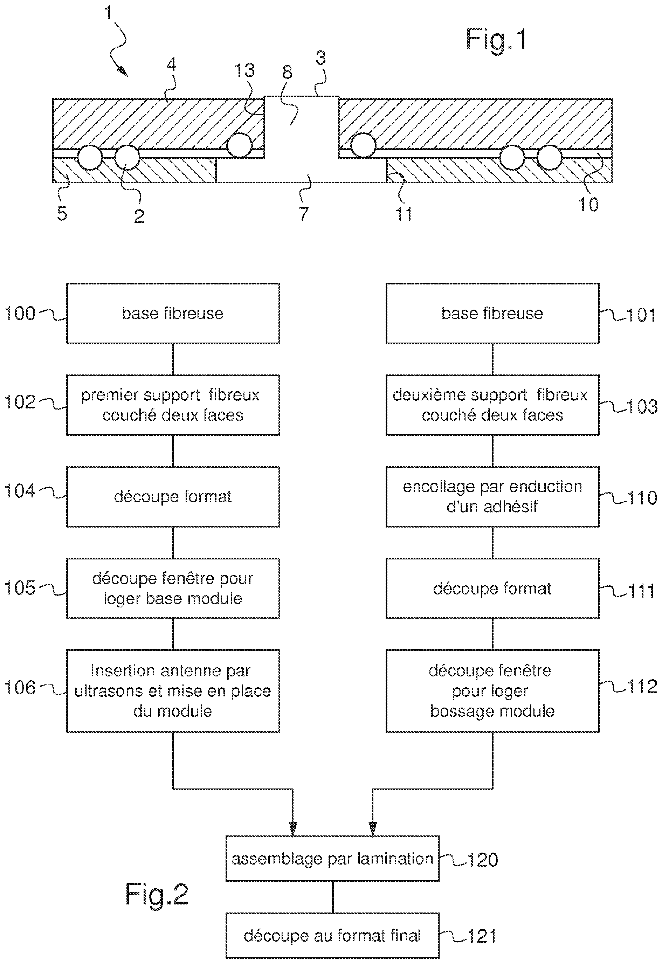

On a représenté à la figure 1 un insert 1 réalisé conformément à l'invention.

Cet insert 1 comporte un premier support fibreux 2, un composant électronique tel qu'un module 3 par exemple, un deuxième support fibreux 4 et une antenne filaire 5 en cuivre avec une peau dotée d'un vernis thermoscellable.

Le module 3 comporte dans l'exemple considéré une base 7, encore appelée *lead frame,* et un bossage 8 logeant une puce RFID, un tel bossage étant encore appelé *potting.*

L'antenne 5 est connectée électriquement a ses extrémités a des contacts respectifs situés sur la base 7, de part et d'autre du bossage 8. Dans une variante non illustrée, l'antenne est seulement couplée électromagnétiquement au module.

Les premier et deuxième supports 2 et 4 sont lies par une couche de liaison 10 comportant un ou plusieurs adhésifs.

Le premier support 2 comporte un évidement 11 accueillant la base 7 et le deuxième support un évidement 13 accueillant le bossage 8. Les évidements 11 et 13 sont des fenêtres de dimensions différentes dans l'exemple considéré.

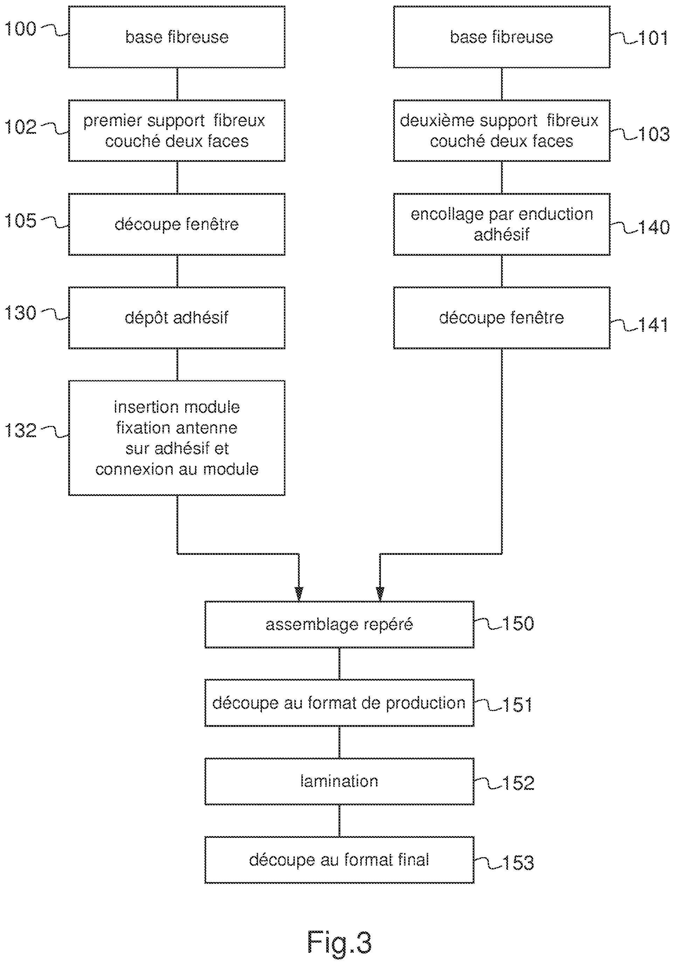

On va décrire en se référant aux figures 2 et 3 des exemples de procédé de fabrication de l'insert 1.

Le procédé de la figure 2 comporte des étapes 100 et 101 de fabrication de bases fibreuses en bobine, dans une machine à papier, et des étapes 102 et 103 de couchage de ces bases fibreuses afin de réaliser des premier et deuxième supports fibreux couchés sur deux faces.

Le premier support fibreux 2 est découpé au format de production a une étape 104 puis la fenêtre 11 est découpée a l'étape 105 pour loger la base du module dans l'épaisseur de ce premier support.

L'antenne 5 est insérée par ultrasons à une étape 106, avec une connexion du module 3 aux deux extrémités de l'antenne.

La technique d'insertion par ultrasons permet une pénétration du fil d'antenne avec fusion locale du support et insertion par pression du fil d'antenne dans ce support et son maintien sur le support après refroidissement.

Les fils d'antennes utilisés plus particulièrement dans le cas des dispositifs RFID fonctionnant à 13,56 MHz sont par exemple ceux vendus par la société Elektrisola. Ces fils de cuivre présentent en général un vernis isolant et éventuellement un vernis thermoscellable en guise de peau externe. Ce vernis thermoscellable peut prendre différentes natures, comme par exemple un polymère thermoplastique de type polyamide, et selon les vernis utilisés, les conditions d'insertion du fil peuvent varier en température.

Le deuxième support fibreux 4 est encollé à une étape 110 par enduction d'un adhésif, par exemple un adhésif réactif à chaud, avec application éventuelle d'un film protecteur à faible énergie dc surface pour éviter tout blocking le temps du stockage et de la découpe avant l'étape de lamination. Apres encollage, le deuxième support fibreux 4 est découpé au format de production à l'étape 111 et la fenêtre 13 est découpée à l'étape 112 pour loger le bossage 8 du module dans l'épaisseur de ce deuxième support fibreux.

Les premier et deuxième supports fibreux sont assembles par lamination dans une étape 120, par exemple par passage en presse à 140 °C pendant 10 minutes, sous une pression par exemple de 20 kg/cm², afin de permettre par exemple une réticulation de l'adhésif déposé par enduction sur le deuxième support fibreux.

L'ensemble peut être découpé à une étape 121 au format final.

Dans le procédé de la figure 3, après le couchage de la base fibreuse du premier support flexible 2, la fenêtre 11 destinée à loger la base 7 du module 3 est découpée puis un adhésif est déposé à l'étape 130 sur la face destinée à recevoir l'antenne. Cet adhésif est un adhésif avec pégosité naturelle ou déclenchée, qui peut être pulvérisé ou déposé par impression ou transfert, au moins à l'endroit où l'antenne sera déposée sur le premier support flexible.

L'étape 132 correspond à l'insertion du module 3 dans la fenêtre 11 et à la fixation de l'antenne sur l'adhésif déposé à l'étape 130, le module 3 étant connecté à l'antenne.

Le deuxième support fibreux 4 subit à l'étape 140 un encollage par enduction d'un adhésif qui est par exemple un adhésif réactif à chaud, avec application d'une couche de libération éventuelle.

Ensuite, à l'étape 141, la fenêtre 13 est découpée et à l'étape 150, les premier et deuxième support fibreux sont assembles de manière repérée, pour positionner les fenêtres 11 et 13 en regard, puis l'ensemble peut être découpé à l'étape 151 avant d'être laminé à une étape 152 par passage en presse, par exemple à 140 °C pendant 10 minutes, pour permettre une réticulation de l'adhésif du deuxième support fibreux et éventuellement une réticulation de celui déposé sur le premier support fibreux. A l'étape 153, l'ensemble est découpé au format final.

On va maintenant décrire des exemples de formation des constituants de l'insert.

### Exemples proposés

Les supports fibreux réalisés dans les exemples 1 et 3 à 5 conviennent particulièrement bien à la réalisation d'un insert selon l'invention, tel que celui représenté à la figure 1 par exemple.

Les inserts des exemples 1 et 2 peuvent être fabriques selon le procédé de la figure 2 et ceux des exemples 3 à 6 selon le procédé de la figure 3.

### Exemple 1

Le premier support flexible 2 est fabriqué sur la machine à papier de façon à ce que le support comprenne une base fibreuse composée d'environ 21 % sec en masse par rapport au papier fini de fibres synthétiques en polyamide, d'environ 4 mm de longueur et d'environ 1.7 dteX de diamètre, et d'environ 56 % de fibres cellulosiques. Les fibres cellulosiques sont composées de 75 % en nombre des fibres courtes (issues de feuillus) et de 25 % en nombre de fibres longues (issues de résineux).

Le support comprend aussi environ 13 % en poids par rapport au papier fini d'au moins une charge minérale, introduite soit au raffinage, soit plus tard en mélangeuse. La charge minérale est par exemple du kaolin.

La base fibreuse après formation en feuille est surfacée sur la machine à papier par un système de *size press.* Le bain de *size press* contient un liant, par exemple du polyvinyl alcool, à hauteur de 4 % en poids sec par rapport au bain, un agent assouplissant, par exemple de la glycérine à hauteur de 15 % en poids sec par rapport au bain, et des pigments, par exemple du kaolin à hauteur de 4 % en poids sec par rapport au bain, soit un extrait sec final de 23 %.

Lors de l'imprégnation en *size press*, le papier est imprégné d'environ 40 g/m² de bain humide, soit une reprise sèche d'environ 9 g/m² sec.

La base fibreuse est ensuite enduite sur ses deux faces par le biais d'une coucheuse lame d'air, avec une sauce de couchage comprenant 30 parts de liant de couchage de type styrène acrylique et 100 parts d'un mélange de pigments à base de carbonate de calcium, hydrate d'alumine et silicate de sodium.

La dépose de couche sur le support est de l'ordre de 10 +/-2 g/m² sec par face, par exemple.

Ce support enduit offre une bonne résistance à la déchirure grâce à la présence de fibres synthétiques de 4 mm. Il offre aussi une certaine flexibilité du fait de la présence des fibres synthétiques, des charges en masse et en surface, et de la glycérine.

Enfin, de par la présence de la couche de surface comprenant au moins un liant thermoplastique, il offre une bonne aptitude à l'insertion d'une antenne par ultrasons ainsi que, du fait de la présence de charges dites absorbantes comme le silicate et l'hydrate d'alumine, une capacité d'absorption et une énergie de surface favorables à un contrecollage ultérieur.

Le second support est réalisé sur machine à papier et sur coucheuse avec une composition de même nature mais avec une épaisseur et donc un grammage diffèrent.

Le deuxième support est enduit d'un adhésif réactif à chaud, par exemple à base de polyuréthane réactif, qui offrira après assemblage avec le premier support et lamination à chaud, toutes les qualités attendues notamment d'inviolabilité pour prévenir tout enlèvement du dispositif RFID par un fraudeur en vue de l'utiliser dans un autre document.

L'insert ainsi réalisé offre une bonne résistance aux tentatives de falsification à sec, à chaud et dans les solvants, présente une bonne flexibilité et une cohésion suffisante pour prévenir toute délamination spontanée. Par ailleurs, cet insert présente les qualités de surface convenant à un collage avec une colle froide Vinylique ou acrylique telle qu'utilisée actuellement pour l'intégration entre la couverture et la page de garde d'un livret de passeport.

### Exemple 2

Dans cet exemple non couvert par l'invention, l'insert est réalisé avec des supports flexibles de même formulation que dans l'exemple 1, à l'exception de l'absence de charges en masse et d'une modification du bain de la *size press* qui contient un liant de couchage, par exemple du PVA à hauteur de 4 % en poids sec par rapport au bain, un agent assouplissant, par exemple de la glycérine à hauteur de 15 % en poids sec par rapport au bain et un produit de collage de surface de base acrylique à hauteur de 4 % en poids commercial par rapport au bain.

La flexibilité de l'insert obtenu est un peu plus faible que dans l'exemple précèdent du fait de l'absence de charges mais la résistance à la falsification par pelage ainsi que la cohésion de l'insert sont améliorées car la cohésion interne de chacun des supports flexibles est plus élevée.

### Exemple 3

L'insert est réalisé avec des supports flexibles de même formulation que dans l'exemple 1, à l'exception du bain de *size press* qui est remplacé par un bain d'imprégnatrice comprenant uniquement un latex souple comme liant, par exemple un latex styrène acrylique de Tg égale à 4°C, qui permet de conférer à la fois de la souplesse et de la cohésion au support.

Un adhésif est appliqué sur le premier support flexible à l'aide d'un système de pulvérisation équipé de buse.

Cet adhésif, utilisé pour solidariser l'antenne et le premier support fibreux, est par exemple un adhésif de base acrylate uréthane présentant à l'état humide une pégosité suffisante pour maintenir l'antenne. Cet adhésif peut comprendre aussi un agent réticulant de type isocyanate pour permettre la réticulation de l'adhésif lors de l'opération ultérieure de lamination à chaud.

Le deuxième support est enduit d'un adhésif réactif à chaud, par exemple à base de copolymère acrylate, qui est compatible avec l'adhésif du premier support avec lequel il sera en regard au niveau de l'antenne.

L'insert après assemblage et lamination présente toutes les qualités attendues notamment d'inviolabilité, pour prévenir tout enlèvement du dispositif RFID par un fraudeur en vue de l'utiliser dans un autre document. Il présente aussi une cohésion interne très élevée tout en ayant une grande flexibilité.

Par ailleurs, cet insert, grâce à la présence des couches chargées à la surface des supports, offre des qualités de surface convenant à un collage avec une colle froide vinylique ou acrylique telle qu'utilisée actuellement pour l'intégration entre la couverture et la page de garde d'un livret de passeport.

### Exemple 4

L'insert est réalisé avec des premier et deuxième supports flexibles de même formulation que dans l'exemple 3, à l'exception du bain de *size press* qui comprend de l'urée nitrate comme agent assouplissant en plus du latex souple comme liant de la base fibreuse, d'où encore plus de flexibilité.

### Exemple 5

L'insert est réalisé avec des premier et deuxième supports de même formulation que dans l'exemple 3, mais le liant de la base fibreuse est introduit par précipitation des particules de liant *in situ* sur les fibres, lors de la formation de la feuille, de façon a conférer de la souplesse au support.

Les particules de liant sont par exemple des particules de latex chargées anioniquement, qui précipitent par interactions ioniques sur des fibres portant des charges cationiques.

Les fibres de cellulose étant chargées anioniquement, des additifs tels que la polyamideamine epichlorhydrine peuvent être fixés au préalable sur les fibres pour modifier leur charge.

Les particules de latex de Tg faible, inférieure a -10 °C, apportent de la souplesse matériau tout en n'engendrant pas de problème d'encrassement dans l'imprégnatrice.

Si le taux de latex introduit dans la base fibreuse est suffisamment élevé, par exemple d'au moins 20 % en masse dans la base fibreuse le surfaçage du support peut être réalisé avec d'autres liants de surface, par exemple un PVA, et ce liant n'aura pas tendance à rigidifier le support.

### Exemple 6

Dans cet exemple non couvert par l'invention, le premier support flexible est fabriqué sur la machine à papier de façon à ce que le support comprenne un mélange fibreux a 100 % en fibres cellulosiques.

Le support comprend aussi environ 20 % en poids par rapport au papier fini d'au moins une charge minérale, introduite soit au raffinage, soit plus tard en mélangeuse. La charge minérale est par exemple du kaolin.

Le mélange fibreux après formation en feuille est imprégné a coeur sur la machine à papier par un système d'imprégnatrice.

Le bain d'imprégnatrice contient un liant, par exemple du latex synthétique de type styrène acrylique de Tg voisine 4 °C, à hauteur de 15 % en poids sec par rapport au bain, un agent assouplissant, par exemple un mélange d'urée et de nitrate, à hauteur respectives de 10 % et 5 % en poids sec par rapport au bain soit un extrait sec final de 23 %.

Lors de l'imprégnation en imprégnatrice, le papier est imprégné d'environ 70 g/m2 de bain humide, soit une reprise sèche d'environ 21 g/m².

Le support fibreux est ensuite enduit sur ses deux faces par le biais d'une coucheuse lame d'air, avec une sauce de couchage comprenant 30 parts de liant de type styrène acrylique et 100 parts d'un mélange de pigments a base de silicate de sodium. La dépose de couche sur le support est de l'ordre de 10 +/-2 g/m² sec par face.

L'adhésif destiné au maintien de l'antenne sur le premier support est appliqué sous forme de cordons sur le premier support par exemple à l'aide d'un système à aiguille, dans la zone de l'antenne. L'adhésif utilisé est par exemple un adhésif de base époxy, présentant une pégosité suffisante pour maintenir l'antenne pendant quelques secondes avant qu'elle ne soit recouverte par le deuxième support flexible.

L'adhésif est par exemple un adhésif qui réticule sous UV. Grâce à une fibre optique dotée d'une diode électroluminescente, l'adhésif peut être soumis au rayonnement UV en même temps ou juste avant que l'antenne soit déroulée sur le premier support flexible, ce qui provoque sa réticulation.

Le deuxième support a été enduit préalablement d'un adhésif réactif à chaud, par exemple à base de polyuréthane réactif comprenant un agent réticulant latent, l'adhésif étant réticulable par apport de chaleur.

Lors de la lamination à chaud et sous pression des deux supports flexibles de façon à prendre en sandwich l'antenne, l'adhésif sur toute la surface du deuxième support se réticule et crée un assemblage présentant les résistances mécaniques, chimiques et thermiques.

L'invention n'est pas limitée aux exemples qui viennent d'être décrits.

Des particularités de mise en oeuvre de ces exemples peuvent se combiner au sein de variantes non illustrées.

L'expression « comportant » doit se comprendre comme étant synonyme de « comportant au moins un », sauf si le contraire est spécifié.

## Revendications

1. Assemblage comportant :
- une antenne (5) comportant au moins une spire conductrice,
- un premier support fibreux (2) sur lequel s'étend l'antenne, ce premier support comportant un papier couché comprenant une base fibreuse, l'antenne étant solidarisée à une face du support flexible, le papier comportant sur cette face au moins une couche de surface, assemblage **caractérisé par le fait que** l'antenne (5) est une antenne filaire, que la base fibreuse du papier couché ou premier support fibreux (2) est formée à raison d'au moins 30% en masse dans la base fibreuse de fibres naturelles, de fibres synthétiques, et **par le fait que** la couche de surface du papier comprend au moins une charge minérale et un liant de couchage,
- la longueur moyenne des fibres synthétiques étant de 3 à 10 mm et leur diamètre moyen étant compris entre 0,9 et 4,2 dTex,
- le liant de couchage comportant une matière thermoplastique, la quantité de matière thermoplastique dans la couche de surface étant inférieure ou égale à 20 g/m² sec, et
- la charge minérale dans la couche de surface étant une charge absorbante ayant une capacité d'absorption d'huile selon DIN EN ISO 787-5 supérieure ou égale à 30 ml/100g et étant choisie parmi les carbonates, en particulier le calcium, le talc, le kaolin, l'hydrate d'alumine, le dioxyde de titane, le silicate de sodium et leurs mélanges,
- les fibres synthétiques étant présentes à hauteur de 5% à 25% en masse de base fibreuse,
- le liant de couchage de la couche de surface comportant un polymère ou un copolymère de nature styrène butadiène, acrylique, styrène acrylique ou vinylique.

2. Assemblage selon la revendication l, la base fibreuse comportant en masse au moins 40%, mieux 50 %, encore mieux 60 %, préférentiellement au moins 70 %, de fibres naturelles.

3. Assemblage selon la revendication 2, la base fibreuse comportant une proportion moins élevée de fibres naturelles longues que de courtes.

4. Assemblage selon la revendication 2, la base fibreuse comportant une proportion moins élevée de fibres naturelles courtes que de fibres naturelles longues, notamment 20 % des fibres naturelles sont courtes et 80 % des fibres naturelles sont longues.

5. Assemblage selon l'une des revendications précédentes, le liant de couchage comportant une matière thermoplastique, la quantité de matière thermoplastique dans la couche de surface étant inférieure ou égale à l0g/m² sec.

6. Assemblage selon l'une quelconque des revendications 1 à 5, la base fibreuse du premier support comportant un liant.

7. Assemblage selon la revendication 6, le liant de la base fibreuse étant précipité en masse.

8. Assemblage selon la revendication 5, le liant de la base fibreuse étant introduite dans la base fibreuse par surfaçage.

9. Assemblage selon la revendication 7, le liant de la base fibreuse étant choisi parmi les copolymères styrène butadiène et les polymères acryliques.

10. Assemblage selon l'une quelconque des revendications précédentes, la base fibreuse comportant un agent assouplissant.

11. Assemblage selon l'une quelconque des revendications 1 à 10, comportant sur la face du papier recevant l'antenne un adhésif.

12. Assemblage selon la revendication 11, comportant une pégosité, naturelle ou déclenchée, notamment par rayonnement UV ou EB, après sa dépose.

13. Assemblage selon la revendication 12, l'adhésif étant réticulable à chaud.

14. Assemblage selon l'une quelconque des revendications 11 à 13, l'adhésif étant déposé pleine laize.

15. Assemblage selon l'une quelconque des revendications 11 à 13, l'adhésif recouvrant seulement une partie de la face du premier support flexible, sur une région s'étendant sous l'antenne.

16. Insert comportant :
- un assemblage tel que défini dans l'une quelconque des revendications précédentes,
- un deuxième support fibreux (40) superposé et collé au premier, l'antenne étant située entre les deux supports.

17. Insert selon la revendication précédente, les supports comportant deux évidements respectifs (1 1,13) superposés au moins partiellement, et dans lesquels est disposé un module RFID comportant une puce de circuit intégré.

18. Insert selon l'une quelconque des revendications 16 ou 17, le deuxième support (4) étant de composition identique au premier (2).

19. Insert selon l'une quelconque des revendications 16 à 18, le deuxième support comportant un adhésif activable.

20. Procédé de fabrication d'un assemblage tel que défini dans l'une quelconque des revendications 1 à 15, comportant l'étape consistant à déposer le fil d'antenne sur le premier support.

21. Procédé selon la revendication précédente, comportant l'étape consistant à enduire le premier support flexible d'un adhésif avant la pose du fil d'antenne dessus.

22. Procédé selon la revendication 20, la fixation du fil d'antenne sur le premier support s'effectue par thermocompression ou par ultrasons.

23. Procédé de fabrication d'un insert, comportant les étapes consistant à :
- réaliser un assemblage tel que défini dans l'une quelconque des revendications 1 à 15,
- fixer sur l'assemblage un deuxième support, l'antenne étant située entre les deux supports.

24. Procédé selon la revendication précédente, le deuxième support étant enduit d'un adhésif et les premier et deuxième supports étant laminés à chaud.

25. Procédé de fabrication d'un document de sécurité comportant l'étape consistant à assembler un insert tel que défini à l'une quelconque des revendications 16 à 19 avec un livret ou au moins un film, notamment avec une colle à froid, en particulier une colle vinylique ou acrylique, ou avec un adhésif activable à chaud.

## Patentansprüche

1. Anordnung mit:
- einer Antenne (5), die wenigstens eine leitfähige Spiralwindung aufweist,
- einem ersten fasrigen Träger (2), auf dem sich die Antenne erstreckt, wobei der erste Träger ein gestrichenes Papier aufweist, das eine fasrige Basis umfasst, wobei die Antenne mit einer Seite des flexiblen Trägers fest verbunden ist, wobei das Papier auf dieser Fläche wenigstens eine Oberflächenschicht aufweist, wobei die Anordnung **dadurch gekennzeichnet ist, dass** die Antenne (5) eine drahtgebundene Antenne ist, dass die fasrige Basis des gestrichenen Papiers oder ersten fasrigen Trägers (2) zu wenigstens 30 Masse-% in der fasrigen Basis von Naturfasern von synthetischen Fasern gebildet ist und dass die Oberflächenschicht des Papiers wenigstens einen mineralischen Füllstoff und ein Streichbindemittel umfasst,
- wobei die durchschnittliche Länge der synthetischen Fasern von 3 bis 10 mm beträgt und ihr durchschnittlicher Durchmesser zwischen 0,9 und 4,2 dTex beträgt,
- wobei das Streichbindemittel ein thermoplastisches Material aufweist, wobei die Menge an thermoplastischem Material in der Oberflächenschicht kleiner oder gleich 20 g/m² s beträgt, und
- wobei der mineralische Füllstoff in der Oberflächenschicht ein absorbierender Füllstoff ist, der eine Ölabsorptionsfähigkeit nach DIN EN ISO 787-5 größer oder gleich 30 ml/100 g aufweist und ausgewählt ist aus den Carbonaten, insbesondere Kalzium, Talkum, Kaolin, Aluminiumoxidhydrat, Titandioxid, Natriumsilikat und Gemischen davon,
- wobei die synthetischen Fasern in der Höhe von 5 Masse-% bis 25 Masse-% der fasrigen Basis vorhanden sind,
- wobei das Streichbindemittel der Oberflächenschicht ein Polymer oder ein Copolymer der Butadien-Styrol-, Acryl-, Acryl-Styrol- oder Vinyl-Art aufweist.

2. Anordnung nach Anspruch 1, wobei die fasrige Basis wenigstens zu 40 Masse-%, besser 50 Masse-%, noch besser 60 Masse-%, vorzugsweise wenigstens zu 70 Masse-% Naturfasern aufweist.

3. Anordnung nach Anspruch 2, wobei die fasrige Basis einen geringeren Anteil an langen Naturfasern als an kurzen Naturfasern aufweist.

4. Anordnung nach Anspruch 2, wobei die fasrige Basis einen geringeren Anteil an kurzen Naturfasern als an langen Naturfasern aufweist, insbesondere 20 % der Naturfasern kurz sind und 80 % der Naturfasern lang sind.

5. Anordnung nach einem der vorhergehenden Ansprüche, wobei das Streichbindemittel ein thermoplastisches Material aufweist, wobei die Menge an thermoplastischem Material in der Oberflächenschicht kleiner oder gleich 10 g/m² s beträgt.

6. Anordnung nach einem der Ansprüche 1 bis 5, wobei die fasrige Basis des ersten Trägers ein Bindemittel aufweist.

7. Anordnung nach Anspruch 6, wobei das Bindemittel der fasrigen Basis in Masse abgelagert ist.

8. Anordnung nach Anspruch 5, wobei das Bindemittel der fasrigen Basis in die fasrige Basis durch Abspachteln eingebracht ist.

9. Anordnung nach Anspruch 7, wobei das Bindemittel der fasrigen Basis ausgewählt ist aus den Butadien-Styrol-Copolymeren und den Acryl-Polymeren.

10. Anordnung nach einem der vorhergehenden Ansprüche, wobei die fasrige Basis einen Weichmacher aufweist.

11. Anordnung nach einem der Ansprüche 1 bis 10, die auf der Fläche des Papiers, welche die Antenne aufnimmt, einen Klebstoff aufweist.

12. Anordnung nach Anspruch 11, die nach ihrem Auftrag eine natürliche oder insbesondere durch UV- oder Elektronenstrahlung ausgelöste Klebrigkeit aufweist.

13. Anordnung nach Anspruch 12, wobei der Klebstoff heißvernetzbar ist.

14. Anordnung nach einem der Ansprüche 11 bis 13, wobei der Klebstoff über die volle Bahnbreite aufgetragen ist.

15. Anordnung nach einem der Ansprüche 11 bis 13, wobei der Klebstoff nur einen Teil der Fläche des ersten flexiblen Trägers bedeckt, auf einem Bereich, der sich unter der Antenne erstreckt.

16. Einsatz mit:
- einer Anordnung nach einem der vorhergehenden Ansprüche, einem zweiten flexiblen Träger (40), der über den ersten gelegt und aufgeklebt ist, wobei die Antenne sich zwischen den zwei Trägern befindet.

17. Einsatz nach dem vorhergehenden Anspruch,, wobei die Träger zwei jeweilige Ausnehmungen (11, 13) aufweisen, die wenigstens teilweise übereinander liegen und in denen ein RFID-Modul angeordnet ist, das einen integrierten Schaltungschip aufweist.

18. Einsatz nach einem der Ansprüche 16 oder 17, wobei der zweite Träger (4) einen identischen Aufbau wie der erste Träger (2) aufweist.

19. Einsatz nach einem der Ansprüche 16 bis 18, wobei der zweite Träger einen aktivierbaren Klebstoff aufweist.

20. Verfahren zum Herstellen einer Anordnung nach einem der Ansprüche 1 bis 15, das den Schritt aufweist, der darin besteht, den Antennendraht auf dem ersten Träger aufzubringen.

21. Verfahren nach dem vorhergehenden Anspruch, das den Schritt aufweist, der darin besteht, auf dem ersten flexiblen Träger einen Klebstoff aufzutragen, bevor der Antennendraht darauf verlegt wird.

22. Verfahren nach Anspruch 20, wobei das Befestigen des Antennendrahtes auf dem ersten Träger durch Thermokompression oder durch Ultraschall erfolgt.

23. Verfahren zum Herstellen eines Einsatzes, das die folgenden Schritte aufweist:
- Realisieren einer Anordnung nach einem Ansprüche 1 bis 15,
- Befestigen eines zweiten Trägers auf der Anordnung, wobei sich die Antenne zwischen den zwei Trägern befindet.

24. Verfahren nach dem vorhergehenden Anspruch, wobei auf dem zweiten Träger ein Klebstoff aufgetragen wird und wobei der erste und der zweite Träger heißlaminiert werden.

25. Verfahren zum Herstellen eines Sicherheitsdokuments, aufweisend den Schritt, der darin besteht, einen Einsatz nach einem der Ansprüche 16 bis 19 mit einem Heftchen oder wenigstens einer Folie zu verbinden, insbesondere mit einem Kaltkleber, insbesondere mit einem Vinyl- oder Acrylkleber, oder mit einem heißaktivierbaren Klebstoff.

## Claims

1. Assembly comprising:
- an antenna (5) comprising at least one conductive coil,
- a first fibrous support (2) on which the antenna extends, this first support comprising a coated paper comprising a fibrous base, the antenna being secured to one face of the flexible support, the paper comprising on this face at least one surface layer, assembly **characterized in that** the antenna (5) is a wire antenna, that the fibrous base of the coated paper or first fibrous support (2) is formed in an amount of at least 30% by mass in the base fiber of natural fibers, of synthetic fibers, and **in that** the surface layer of the paper comprises at least one mineral filler and a coating binder,
- the average length of the synthetic fibers being from 3 to 10 mm and their average diameter being between 0.9 and 4.2 dTex,
- the coating binder comprising a thermoplastic material, the quantity of thermoplastic material in the surface layer being less than or equal to 20 g/m² dry, and
- the mineral filler in the surface layer being an absorbent filler having an oil absorption capacity according to DIN EN ISO 787-5 greater than or equal to 30 ml/100g and being chosen from carbonates, in particular calcium, talc, kaolin, alumina hydrate, titanium dioxide, sodium silicate and mixtures thereof,
- synthetic fibers being present in an amount of 5% to 25% by mass of fibrous base,
- the surface layer coating binder comprising a polymer or a copolymer of styrene butadiene, acrylic, acrylic or vinyl styrene nature.

2. Assembly according to claim 1, the fibrous base comprising by mass at least 40%, better 50%, even better 60%, preferably at least 70%, of natural fibers.

3. Assembly according to claim 2, the fibrous base comprising a lower proportion of long natural fibers than short ones.

4. Assembly according to claim 2, the fibrous base comprising a lower proportion of short natural fibers than of long natural fibers, in particular 20% of the natural fibers are short and 80% of the natural fibers are long.

5. Assembly according to one of the preceding claims, the coating binder comprising a thermoplastic material, the amount of thermoplastic material in the surface layer being less than or equal to 10 g/m² dry.

6. Assembly according to any one of claims 1 to 5, the fibrous base of the first support comprising a binder.

7. Assembly according to claim 6, the binder of the fibrous base being precipitated in bulk.

8. Assembly according to claim 5, the fibrous base binder being introduced into the fibrous base by surfacing.

9. Assembly according to claim 7, the fibrous base binder being chosen from styrene butadiene copolymers and acrylic polymers.

10. Assembly according to any one of the preceding claims, the fibrous base comprising a softening agent.

11. Assembly according to any one of claims 1 to 10, comprising an adhesive on the paper face receiving the antenna.

12. Assembly according to claim 11, comprising tackiness, natural or triggered, in particular by UV or EB radiation, after its deposit.

13. Assembly according to claim 12, the adhesive being heat cross linkable.

14. Assembly according to any one of claims 11 to 13, the adhesive being deposited full width.

15. An assembly according to any one of claims 11 to 13, the adhesive covering only a part of the face of the first flexible backing, over a region extending below the antenna.

16. Insert comprising:
- an assembly according to any one of the preceding claims,
- a second fibrous support (40) superimposed and glued to the first, the antenna being located between the two supports.

17. Insert according to the preceding claim, the supports comprising two respective recesses (11,13) superimposed at least partially, and in which an RFID module is disposed, the RFID module comprising an integrated circuit chip.

18. Insert according to any one of claims 16 or 17, the second support (4) having the same composition as the first one (2).

19. Insert according to any one of claims 16 to 18, the second support comprising an activatable adhesive.

20. Method for manufacturing an assembly as defined in any one of claims 1 to 15, comprising the step of depositing the antenna wire on the first support.

21. Method according to the preceding claim, comprising the step of coating the first flexible support with an adhesive before laying the antenna wire thereon.

22. Method according to claim 20, the attachment of the antenna wire to the first support being performed by thermocompression or ultrasound.

23. Method for manufacturing an insert, comprising the steps of:
- carrying out an assembly as defined in any one of claims 1 to 15,
- attaching a second support to the assembly, the antenna being located between the two supports.

24. Method according to the preceding claim, the second support being coated with an adhesive and the first and second supports being hot rolled.

25. Method for manufacturing a security document comprising the step of assembling an insert as defined in any one of claims 16 to 19 with a booklet or at least one film, in particular with a cold glue, in in particular a vinyl or acrylic glue, or with a hot-activatable adhesive
